# EUROPÄISCHE PATENTANMELDUNG

(11) **EP 4 614 050 A1**
(43) Veröffentlichungstag der Anmeldung: **10.09.2025**
(21) Anmeldenummer: 24162315.6
(22) Anmeldetag: 08.03.2024
(51) Int. Cl.: F16L 41/03, F02M 21/02, F16L 55/11, F17C 13/08

(54) **VERTEILER UND H2-HOCHDRUCKSYSTEM**

(71) Anmelder: Robert Bosch GmbH, 70442 Stuttgart (DE)
(72) Erfinder: Priborsky, Pavel, 58606 Jihlava Vysocina (CZ)

(57) **Zusammenfassung**

Verteiler (110) für ein H2-Hochdrucksystem (100), wobei der Verteiler (110) einen Hauptkörper (120) mit einer Anzahl von radialen und/oder axialen Schnittstellen (124) zum Verbinden des Verteilers (110) mit einer Betankungsinfrastruktur (150) und/oder dem H2-Hochdrucksystem (100) umfasst, wobei die Anzahl von Schnittstellen (124) miteinander verbunden sind, um Fluid über eine Hauptbohrung (122) entlang dem Hauptkörper (120) zu verteilen, wobei mindestens eine der Anzahl von Schnittstellen (124) eine Verschlussschraube (130) und eine Dichtungsplatte (140) zum Abdichten der jeweiligen mindestens einen Schnittstelle (124) umfasst.

## Beschreibung

### Stand der Technik

Bekannte Verteiler für Hochdrucksysteme für Wasserstoff umfassen verschiedene Strukturen mit einem oder mehreren Einlässen und einer Anzahl von Auslässen zur Verteilung des Wasserstoffs. Die bekannten Verteiler für Hochdrucksysteme für Wasserstoff sind bis 700 bar und in Zukunft sogar noch höher ausgelegt. Die Verwendung der Verteiler mit einem Gas wie Wasserstoff erfordert eine wohlüberlegte Wahl des Materials für die Verteiler.

Die bekannten Verteiler umfassen radiale Schnittstellen zum Verbinden des Verteilers mit einer Betankungsinfrastruktur, Tanks und/oder anderen Einheiten eines H2-Hochdrucksystems. Typischerweise werden Rohre verwendet, um den Verteiler mit den anderen Einheiten des H2-Hochdrucksystems zu verbinden. Die Rohre werden in die radialen Schnittstellen eingeschoben und durch Sicherungsmittel gesichert. Ein bekanntes Verfahren zum Sichern von Rohren an den radialen Schnittstellen eines Verteilers umfasst das Aufschrauben von Sicherungsmitteln wie Kupplungsmuttern auf Gewinde der radialen Schnittstellen. Durch das Hineinschieben der Rohre in die radialen Schnittstellen werden die Gewinde der radialen Schnittstellen tendenziell in einer radialen Richtung nach außen gedrückt. Diese Verformung verursacht Probleme für den Anschluss der Rohre an den Verteiler. Die Gewinde können verformt werden, wenn die Verbindung erzwungen wird und/oder die Verbindung infolge der Verformung der Schnittstellen keine einfache, sichere, wiederholbare und/oder zuverlässige Verbindung ermöglicht.

### Offenbarung der Erfindung

Die Erfindung beansprucht einen Verteiler für ein H2-Hochdrucksystem mit den Merkmalen des unabhängigen Anspruchs 1. Ferner offenbart die Erfindung ein H2-Hochdrucksystem mit mindestens einem Verteiler mit den Merkmalen des unabhängigen Anspruchs 10. Weitere Vorteile und Einzelheiten der Erfindung ergeben sich aus den abhängigen Ansprüchen, der Beschreibung und den Zeichnungen. In diesem Zusammenhang gelten in Bezug auf den erfindungsgemäßen Verteiler beschriebene Merkmale natürlich jeweils auch in Bezug auf das H2-Hochdrucksystem und umgekehrt, so dass hinsichtlich der Offenbarung betreffs der einzelnen Aspekte der Erfindung stets eine wechselseitige Bezugnahme erfolgt oder erfolgen kann.

Gemäß einem ersten Aspekt der Erfindung offenbart die Erfindung einen Verteiler für ein H2-Hochdrucksystem. Der Verteiler umfasst einen Hauptkörper mit einer Anzahl von radialen und/oder axialen Schnittstellen zum Verbinden des Verteilers mit einer Betankungsinfrastruktur und/oder dem H2-Hochdrucksystem. Die mehreren Schnittstellen sind miteinander verbunden, um Fluid über einen Hauptkörper mit einer Anzahl von radialen und/oder axialen Schnittstellen zum Verbinden des Verteilers mit einer Betankungsinfrastruktur und/oder dem H2-Hochdrucksystem zu verteilen, wobei die Anzahl von Schnittstellen über eine Hauptbohrung entlang dem Hauptkörper miteinander verbunden sind. Mindestens eine der Anzahl von Schnittstellen umfasst eine Verschlussschraube und eine Dichtungsplatte zum Abdichten der jeweiligen mindestens einen Schnittstelle.

Der Verteiler umfasst vorzugsweise eine rohrähnliche Form und/oder eine zylindrische Form. Die Hauptfunktion des Verteilers besteht darin, den Wasserstoff zwischen den axialen und/oder radialen Schnittstellen zu verteilen. Die axialen und radialen Schnittstellen sind hinsichtlich der Funktion als Eingangs- und/oder Ausgangsschnittstellen vorzugsweise austauschbar. Die radialen Schnittstellen erstrecken sich radial vom Hauptkörper aus. Vorzugsweise erstrecken sich die Anzahl von radialen Schnittstellen vom Hauptkörper aus parallel zueinander und/oder in einer Linie miteinander.

Der Verteiler umfasst den Hauptkörper, der vorzugsweise als ein einziges Materialstück verstanden wird. Unter dem Hauptkörper wird vorzugsweise ein geradliniger Hauptkörper und/oder ein Hauptkörper entlang einer virtuellen Achse verstanden. Die axialen Schnittstellen des Verteilers sind vorzugsweise in einer Linie mit der virtuellen Achse des Hauptkörpers angeordnet. Die radialen Schnittstellen sind vorzugsweise radial bezüglich der virtuellen Achse des Hauptkörpers angeordnet. Der Verteiler umfasst vorzugsweise nur zwei, nur eine einzige oder keine axiale Schnittstelle. Der Verteiler umfasst vorzugsweise eine Anzahl von radialen Schnittstellen, vorzugsweise mindestens fünf oder mehr.

Der Hauptkörper umfasst ferner eine Hauptbohrung entlang dem Hauptkörper. Das Fluid wird über die Hauptbohrung entlang dem Hauptkörper auf die Schnittstellen verteilt. Unter der Hauptbohrung wird vorzugsweise ein aufgebohrter, gebohrter und/oder anderweitig bearbeiteter Hohlraum entlang dem Hauptkörper verstanden. Das H2-Hochdrucksystem umfasst vorzugsweise mindestens einen Tank für Wasserstoff und/oder mindestens ein Verbrauchermittel für Wasserstoff, beispielsweise einen Motor und/oder eine Antriebseinheit eines Fahrzeugs. Unter der Betankungsinfrastruktur wird vorzugsweise eine Art von Tankstelle, eine stationäre oder mobile Tankeinheit und/oder eine andere Quelle von Kraftstoff, vorzugsweise Wasserstoff, verstanden.

Der Verteiler umfasst vorzugsweise mindestens eine Eingangsschnittstelle, während die übrigen Schnittstellen vorzugsweise als Ausgangsschnittstellen verwendet werden und/oder durch die mindestens eine Verschlussschraube und die mindestens eine Dichtungsplatte verschlossen werden.

Mindestens eine der Schnittstellen, vorzugsweise einige oder alle der Schnittstellen umfassen jeweils eine Verschlussschraube und eine Dichtungsplatte zum Abdichten der jeweiligen Schnittstellen. Vorzugsweise sind die Verschlussschrauben identisch gestaltet und/oder sind die Dichtungsplatten identisch gestaltet. Die mindestens eine Verschlussschraube und die mindestens eine Dichtungsplatte sind vorzugsweise als separate Teile gestaltet und/oder sind zumindest zum Teil aneinander angebracht. Die mindestens eine Verschlussschraube und die mindestens eine Dichtungsplatte sind vorzugsweise zumindest zum Teil bezüglich einander bewegbar.

Die mindestens eine Verschlussschraube und die mindestens eine Dichtungsplatte erfüllen die gemeinsame Aufgabe des Abdichtens der jeweiligen Schnittstelle. Anders ausgedrückt werden die Verschlussschraube und die Dichtungsplatte vorzugsweise zusammen als ein Dichtungssystem für eine jeweilige Schnittstelle verstanden. Vorzugsweise wird nur die Dichtungsplatte auf eine Art und Weise in der jeweiligen Schnittstelle angeordnet, dass ein Fluid, insbesondere Wasserstoff, in dem Verteiler mit der Dichtungsplatte in Kontakt gelangt. Anders ausgedrückt wird die Verschlussschraube vorzugsweise auf eine Art und Weise in der jeweiligen Schnittstelle angeordnet, dass ein Fluid, insbesondere Wasserstoff, in dem Verteiler nicht mit der Verschlussschraube in Kontakt gelangt. Ein Verteiler, insbesondere eine Schnittstelle, eine Verschlussschraube und eine Dichtungsplatte, der bzw. die auf diese Art und Weise ausgelegt ist, ist besonders vorteilhaft, da die Verschlussschraube günstiger zu produzieren ist und/oder dem Fluid, insbesondere Wasserstoff, in dem Verteiler keine Beachtung geschenkt werden muss. Beispielsweise wird die Verschlussschraube aus relativ billigem Kohlenstoffstahl produziert, der in der Regel nicht für Teile verwendet wird, die mit Wasserstoff in Kontakt gelangen. Die Dichtungsplatte wird vorzugsweise aus demselben Material wie der Hauptkörper des Verteilers hergestellt.

Vorzugsweise wird die Dichtungsfunktion der Dichtungsplatte dadurch ermöglicht, dass die Dichtungsplatte in einer jeweiligen Schnittstelle platziert wird und im Anschluss die Verschlussschraube in die jeweilige Schnittstelle geschraubt wird, insbesondere wobei die Dichtungsplatte durch die Verschlussschraube in der Schnittstelle in Position gehalten wird. Eine Dichtung für einen Verteiler für ein H2-Hochdrucksystem umfasst vorzugsweise gar keine Gummiflachdichtung, da eine Gummiflachdichtung weder für den Druck in solch einem System noch für den Kontakt mit Wasserstoff geeignet ist.

Die Dichtungsplatte ist vorzugsweise rund oder im Wesentlichen rund. Die Formulierung "X oder im Wesentlichen X" soll im Kontext der Erfindung als eine mögliche geringfügige Abweichung, beispielsweise aufgrund von Herstellungstoleranzen, Material- und/oder Prozesseigenschaften, durch die die zugrunde liegende beabsichtigte Funktion des Merkmals nicht geändert wird, verstanden werden.

Durch die Abdichtung mindestens einer der Schnittstellen durch eine Verschlussschraube und eine Dichtungsplatte wird eine weitreichendere und/oder flexiblere Nutzung von Verteilern mit einer Anzahl von radialen und/oder axialen Schnittstellen ermöglicht. Zusätzliche Schnittstellen von Verteilern mit mehr Schnittstellen, als für einen gewissen Anwendungsfall erforderlich sind, sind leicht mit der Verschlussschraube und der Dichtungsplatte gemäß dem erfinderischen Verteiler abzudichten. Dadurch werden die Produktionskosten von Verteilern reduziert, da dieselben Verteiler für einen breiteren Anwendungsbereich verwendet werden können.

Der so gestaltete Verteiler ist besonders vorteilhaft, da der Verteiler, die mindestens eine Verschlussschraube und die mindestens eine Dichtungsplatte eine vorteilhafte Verteilung von Wasserstoff und eine Verbindung mit einer Betankungsinfrastruktur und/oder dem H2-Hochdrucksystem durch die mindestens eine radiale und/oder axiale Schnittstelle ermöglicht, wobei die mindestens eine Verschlussschraube und die mindestens eine Dichtungsplatte das Abdichten mindestens einer jeweiligen Schnittstelle des Verteilers auf eine relativ einfache Art und Weise ermöglichen.

Gemäß einer vorteilhaften Ausgestaltung der Erfindung wird ein Verteiler bereitgestellt, wobei die Dichtungsplatte und/oder der Verteiler und/oder die Verschlussschraube mindestens ein vorragendes Element umfassen, wobei das mindestens eine vorragende Element von der Dichtungsplatte und/oder dem Verteiler und/oder der Verschlussschraube vorragt. Das mindestens eine vorragende Element ist vorzugsweise als ein vorragendes Dichtungselement gestaltet.

Die Dichtungsfunktion der Dichtungsplatte wird vorzugsweise dadurch bereitgestellt, dass die Dichtungsplatte mit der Verschlussschraube in Position gesichert wird. Die Verschlussschraube klemmt vorzugsweise die Dichtungsplatte an die jeweilige Schnittstelle. Ein Dichtungsdruck der Dichtungsplatte und der Verschlussschraube wird vorzugsweise dadurch erhöht, dass die Dichtungsplatte und/oder der Verteiler und/oder die Verschlussschraube mindestens ein vorragendes Element umfassen. Das vorragende Element verringert vorzugsweise die Fläche der Dichtungsplatte und des Verteilers oder der Dichtungsplatte und der Verschlussschraube, die miteinander in Kontakt sind, und dadurch wird der angelegte Dichtungsdruck im Hinblick auf eine identische Kraft, die von dem Gewinde der Verschlussschraube bereitgestellt wird, erhöht. Das vorragende Element ist vorzugsweise einstückig mit der Dichtungsplatte und/oder dem Verteiler und/oder der Verschlussschraube gestaltet. Das mindestens eine vorragende Element ist vorzugsweise als ein vorragender Ring an der Dichtungsplatte und/oder dem Verteiler und/oder der Verschlussschraube gestaltet. Der auf diese Art und Weise gestaltete Verteiler ist besonders vorteilhaft, da das mindestens eine vorragende Element der Dichtungsplatte und/oder des Verteilers und/oder der Verschlussschraube eine vorteilhafte Abdichtung der mindestens einen jeweiligen Schnittstelle des Verteilers auf besonders einfache Art und Weise ermöglicht.

Gemäß einer vorteilhaften Ausgestaltung der Erfindung wird ein Verteiler bereitgestellt, wobei das mindestens eine vorragende Element als eine Beißkante gestaltet ist, die von der Dichtungsplatte und/oder dem Verteiler und/oder der Verschlussschraube vorragt. Das mindestens eine vorragende Element, das als eine Beißkante gestaltet ist, ist vorzugsweise dahingehend gestaltet, die Dichtungsplatte und/oder den Verteiler zumindest zum Teil zu verformen. Die Beißkante ist vorzugsweise dahingehend gestaltet, in die gegenüberliegenden Fläche der Dichtungsplatte und/oder des Verteilers zu greifen, um einen hohen Kontaktdruck bereitzustellen. Die Beißkante ist vorzugsweise mit einem dreieckigen, vorzugsweise trapezförmigen, Querschnitt gestaltet. Die mindestens eine Beißkante ist vorzugsweise als eine vorragende Kante, vorzugsweise eine Kante mit einem runden Verlauf, an der Dichtungsplatte und/oder dem Verteiler und/oder der Verschlussschraube gestaltet. Der auf diese Art und Weise gestaltete Verteiler ist besonders vorteilhaft, da die mindestens eine Beißkante der Dichtungsplatte und/oder des Verteilers und/oder der Verschlussschraube eine vorteilhafte Abdichtung mindestens einer jeweiligen Schnittstelle des Verteilers auf eine besonders einfache Art und Weise ermöglicht.

Gemäß einer vorteilhaften Ausgestaltung der Erfindung wird ein Verteiler bereitgestellt, wobei die Dichtungsplatte zwischen einer Gegendichtungsfläche des Verteilers und der Verschlussschraube angeordnet ist, insbesondere wobei die Gegendichtungsfläche in einem Winkel, insbesondere einem rechten Winkel, zu einer Strömungsrichtung der jeweiligen mindestens einen der Anzahl von Schnittstellen ausgerichtet ist. Wie oben beschrieben wird, wird die Abdichtung vorzugsweise dadurch bereitgestellt, dass die Dichtungsplatte durch die Verschlussschraube an die Schnittstelle geklemmt wird. Die Gegendichtungsfläche des Verteilers, insbesondere der Schnittstelle, stellt eine vorteilhafte Fläche, an die die Dichtungsplatte geklemmt wird und an der abgedichtet wird, bereit. Die Gegendichtungsfläche ist in einem Winkel, insbesondere in einem rechten Winkel, zu einer Strömungsrichtung der jeweiligen mindestens einen der Anzahl von Schnittstellen ausgerichtet. Die Strömungsrichtung einer Schnittstelle wird vorzugsweise als eine Hauptrichtung eines strömenden Fluids durch die jeweilige Schnittstelle aufgefasst. Die Strömungsrichtung einer axialen Schnittstelle befindet sich vorzugsweise auf einer Linie mit der Hauptbohrung. Die Strömungsrichtung einer radialen Schnittstelle ist vorzugsweise rechtwinklig zur Hauptbohrung. Die Gegendichtungsfläche ist vorzugsweise rechtwinklig zu einer Schraubrichtung der Verschlussschraube und/oder rechtwinklig zu dem Gewinde der jeweiligen Schnittstelle gemäß der Beschreibung in einem nachfolgenden Absatz ausgerichtet. Die Gegendichtungsfläche ist vorzugsweise als eine glatte Fläche gestaltet, um eine vorteilhafte Fläche, an der abgedichtet wird, bereitzustellen. Der auf diese Art und Weise gestaltete Verteiler ist besonders vorteilhaft, da die mindestens eine Verschlussschraube und die mindestens eine Dichtungsplatte eine Abdichtung an einer Gegendichtungsfläche mindestens einer jeweiligen Schnittstelle des Verteilers auf eine besonders einfache Art und Weise ermöglichen.

Gemäß einer vorteilhaften Ausgestaltung der Erfindung wird ein Verteiler bereitgestellt, wobei die Verschlussschraube und die Dichtungsplatte aus verschiedenen Materialien hergestellt sind und/oder wobei die Verschlussschraube eine Korrosionsschutzschicht, insbesondere eine Zink- und/oder Nickel(ZnNi)-Beschichtung, umfasst. Die Herstellung der Verschlussschraube und der Dichtungsplatte aus verschiedenen Materialien ist besonders vorteilhaft, da die Verschlussschraube vorzugsweise günstiger zu produzieren ist und/oder dem Fluid, insbesondere Wasserstoff, in dem Verteiler keine Beachtung geschenkt werden muss. Beispielsweise wird die Verschlussschraube aus relativ billigem Kohlenstoffstahl produziert, der in der Regel nicht für Teile verwendet wird, die mit Wasserstoff in Kontakt gelangen. Die Dichtungsplatte wird vorzugsweise aus demselben Material wie der Hauptkörper des Verteilers hergestellt. Vorzugsweise umfasst die Verschlussschraube eine Korrosionsschutzschicht, insbesondere eine Zink- und/oder Nickel(ZnNi)-Beschichtung, zum Schützen der Verschlussschraube vor Korrosion. Die Verschlussschraube ist in der Regel zumindest zum Teil mit dem Umfeld des Verteilers in Kontakt und somit korrosionsanfällig. Eine Korrosionsschutzschicht ermöglicht eine leichte und sichere Lösung für die Bereitstellung einer langen Lebensdauer und einer sicheren Abdichtung durch die Verschlussschraube. Der auf diese Art und Weise gestaltete Verteiler ist besonders vorteilhaft, da die Konstruktionsausgestaltungen der mindestens einen Verschlussschraube und der mindestens einen Dichtungsplatte eine Abdichtung der mindestens einen jeweiligen Schnittstelle des Verteilers auf eine besonders einfache Art und Weise ermöglichen.

Gemäß einer vorteilhaften Ausgestaltung der Erfindung wird ein Verteiler bereitgestellt, wobei die Verschlussschraube ein Außengewinde umfasst und die mindestens eine der Anzahl von Schnittstellen ein Innengewinde umfasst, um die Verschlussschraube in den Verteiler zu schrauben und/oder die Dichtungsplatte zwischen die mindestens eine der Anzahl von Schnittstellen und die Verschlussschraube zu klemmen. Das Innengewinde der mindestens einen Schnittstelle sorgt für eine vorteilhafte Strukturfestigkeit zur Verbindung mit der Verschlussschraube und somit für die Abdichtung zwischen der Dichtungsplatte und der jeweiligen Schnittstelle. Vorzugsweise sind, wie oben erwähnt wird, alle der Anzahl von Schnittstellen identisch oder im Wesentlichen identisch ausgelegt. Im Hinblick auf die zuvor erwähnten Merkmale umfassen vorzugsweise alle Schnittstellen ein Innengewinde, um die Verschlussschraube in die Schnittstellen zu schrauben. Eine Verschlussschraube mit einem Außengewinde ist besonders leicht bei geringen Kosten und mit wenig Material zu produzieren. Das Innengewinde an der Schnittstelle und das Außengewinde an der Verschlussschraube gestatten einen vorteilhaft kleinen Installations- und/oder Einbauraum für den Verteiler. Vorzugsweise ist das Innengewinde der Schnittstelle lang und/oder tief genug dafür, die Verschlussschraube komplett in der Schnittstelle einzubetten, gestaltet. Der auf diese Art und Weise gestaltete Verteiler ist besonders vorteilhaft, da die Konstruktionsausgestaltungen der mindestens einen Verschlussschraube und der jeweiligen Schnittstelle eine Abdichtung der mindestens einen jeweiligen Schnittstelle des Verteilers auf eine besonders einfache Art und Weise ermöglichen.

Gemäß einer vorteilhaften Ausgestaltung der Erfindung wird ein Verteiler bereitgestellt, wobei die Verschlussschraube ein Anordnungselement umfasst und die Dichtungsplatte ein Gegenanordnungselement umfasst, wobei das Anordnungselement und das Gegenanordnungselement zumindest zum Teil ineinandergreifend und/oder dazu ausgelegt sind, die Dichtungsplatte bezüglich der Verschlussschraube anzuordnen. Die Verschlussschraube und die Dichtungsplatte sind vorzugsweise zumindest zum Teil separat und/oder bezüglich einander beweglich. Somit ist eine Anordnung der Dichtungsplatte zur Verschlussschraube für eine sichere und wiederholbare Abdichtung einer jeweiligen Schnittstelle wünschenswert. Das Anordnungselement und das Gegenanordnungselement stellen eine einfache Lösung für die Anordnung der Dichtungsplatte bezüglich der Verschlussschraube bereit. Vorzugsweise wird die Dichtungsplatte durch die Anordnung der Dichtungsplatte bezüglich der Verschlussschraube zentriert. Vorzugsweise sind das Anordnungselement und das Gegenanordnungselement zumindest zum Teil ineinandergreifend, wobei die Positionierung der Dichtungsplatte bezüglich der Verschlussschraube durch das Anordnungselement und das Gegenanordnungselement geleitet und/oder beschränkt wird. Beispielsweise ist das Anordnungselement als ein vorragendes Anordnungselement gestaltet und ist das Gegenanordnungselement als ein zurückgesetztes Gegenanordnungselement gestaltet, um eine Anordnung der Dichtungsplatte bezüglich der Verschlussschraube zu gestatten. Der auf diese Art und Weise gestaltete Verteiler ist besonders vorteilhaft, da die Konstruktionsausgestaltungen der mindestens einen Verschlussschraube und der mindestens einen Dichtungsplatte eine Anordnung der mindestens einen Verschlussschraube und der mindestens einen Dichtungsplatte und eine Abdichtung der mindestens einen jeweiligen Schnittstelle des Verteilers auf besonders einfache Art und Weise ermöglichen.

Gemäß einer vorteilhaften Ausgestaltung der Erfindung wird ein Verteiler bereitgestellt, wobei der Verteiler und/oder die Dichtungsplatte zumindest zum Teil aus Stahl, insbesondere austenitischem Edelstahl, hergestellt sind und/oder der Verteiler zumindest zum Teil durch ein Schmiedeverfahren, ein Gussverfahren, ein Bearbeitungsverfahren, ein 3D-Druckverfahren und/oder ein Druckgussverfahren hergestellt wird. Die Wahl von austenitischem Edelstahl für den Verteiler, insbesondere für den Hauptkörper, und/oder die Dichtungsplatte ist besonders vorteilhaft für die Verwendung des Verteilers mit einem H2-Hochdrucksystem, da austenitischer Edelstahl eine hohe Beständigkeit gegen Wasserstoffversprödung aufweist. Zu den bevorzugten Verfahren zur Herstellung des Verteilers gehören ein Bearbeitungsverfahren in Kombination mit einem Schmiedeverfahren, einem Gussverfahren oder 3D-Druck, um die Produktionskosten zu senken, die Qualität des Verteilers zu erhöhen und/oder einen einfachen und schnellen Produktionszyklus zu ermöglichen. Der auf diese Weise gestaltete Verteiler ist besonders vorteilhaft, da die Konstruktionsausgestaltungen und das Material des Verteilers und/oder der Dichtungsplatte eine Abdichtung der mindestens einen jeweiligen Schnittstelle des Verteilers auf besonders einfache Art und Weise ermöglichen.

Gemäß einer vorteilhaften Ausgestaltung der Erfindung wird ein Verteiler bereitgestellt, wobei die Dichtungsplatte einen ersten Durchmesser umfasst und die Hauptbohrung einen zweiten Durchmesser umfasst, wobei der erste Durchmesser größer als der zweite Durchmesser, insbesondere mindestens 125 % oder mindestens 150 % größer, ist. Anders ausgedrückt ist die Dichtungsplatte vorzugsweise größer als die Hauptbohrung, so dass die Hauptbohrung vorteilhaft abgedichtet werden kann. Der Verteiler und/oder die mindestens eine Schnittstelle umfassen vorzugsweise einen Bereich mit einem größeren Radius für die Anordnung der Dichtungsplatte. Vorzugsweise stellt die zuvor erwähnte Gegendichtungsplatte einen Übergang von der Hauptbohrung zu dem Bereich mit dem größeren Radius für die Dichtungsplatte bereit. Der auf diese Weise gestaltete Verteiler ist besonders vorteilhaft, da die Konstruktionsausgestaltungen des Verteilers und/oder der Dichtungsplatte eine Abdichtung der mindestens einen jeweiligen Schnittstelle des Verteilers auf besonders einfache Art und Weise ermöglichen.

Gemäß dem zweiten Aspekt der Erfindung offenbart die Erfindung ein H2-Hochdrucksystem. Das H2-Hochdrucksystem umfasst mindestens einen Verteiler gemäß dem ersten Aspekt. Das beschriebene H2-Hochdrucksystem weist alle Vorteile auf, die bereits für den Verteiler gemäß dem ersten Aspekt der Erfindung beschrieben wurden. Der Verteiler und das H2-Hochdrucksystem sind vorzugsweise durch mindestens eine der radialen und/oder axialen Schnittstellen aneinander befestigt.

Nachfolgend werden ein Verteiler für ein H2-Hochdrucksystem und ein H2-Hochdrucksystem gemäß der Erfindung unter Bezugnahme auf Figuren näher erläutert. Die Figuren zeigen schematisch:
- Figur 1: einen Verteiler eines H2-Hochdrucksystems in einer seitlichen Schnittansicht,
- Figur 2: eine Schnittstelle eines Verteilers in einer detaillierten seitlichen Schnittansicht,
- Figur 3: eine weitere Schnittstelle eines Verteilers in einer detaillierten seitlichen Schnittansicht, und
- Figur 4: eine weitere Schnittstelle eines Verteilers in einer detaillierten seitlichen Schnittansicht.

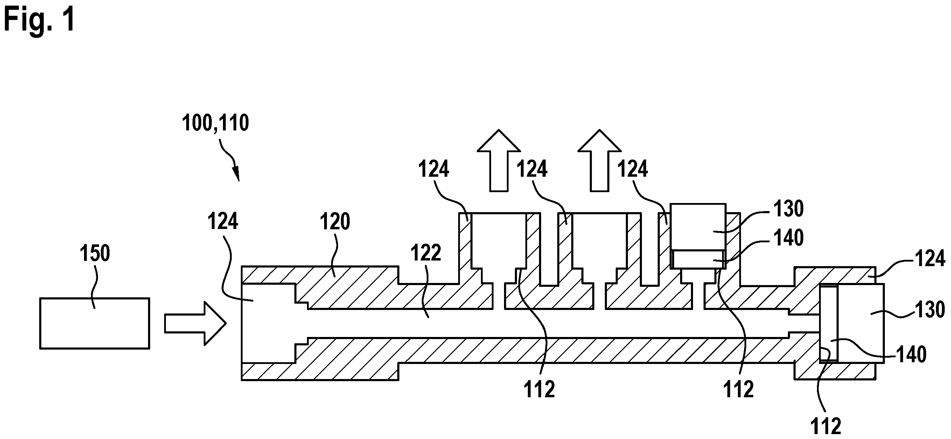

Merkmale mit derselben Funktion bzw. demselben Wirkprinzip sind in Fig. 1 bis 4 jeweils mit denselben Bezugszeichen versehen.

In Fig. 1 wird eine seitliche Schnittansicht eines Verteilers 110 eines H2-Hochdrucksystems 100 gezeigt. Der Verteiler 110 umfasst einen Hauptkörper 120 mit drei radialen und zwei axialen Schnittstellen 124 zum Verbinden des Verteilers 110 mit einer Betankungsinfrastruktur 150 und dem H2-Hochdrucksystem 100. Die Anzahl von Schnittstellen 124 sind miteinander verbunden, um Fluid über eine Hauptbohrung 122 entlang dem Hauptkörper 120 zu verteilen, wobei zwei der Anzahl von Schnittstellen 124 jeweils eine Verschlussschraube 130 und eine Dichtungsplatte 140 zum Abdichten der jeweiligen Schnittstellen 124 umfassen. Die Dichtungsplatten 140 sind jeweils zwischen einer Gegendichtungsfläche 112 des Verteilers 110 und der Verschlussschraube 130 angeordnet, wobei die Gegendichtungsflächen 112 rechtwinklig zu einer Strömungsrichtung der jeweiligen Schnittstellen 124 ausgerichtet sind. Die Verschlussschrauben 130 und die Dichtungsplatte 140 sind aus unterschiedlichen Materialien hergestellt. Die Verschlussschrauben 130 umfassen eine Korrosionsschutzschicht.

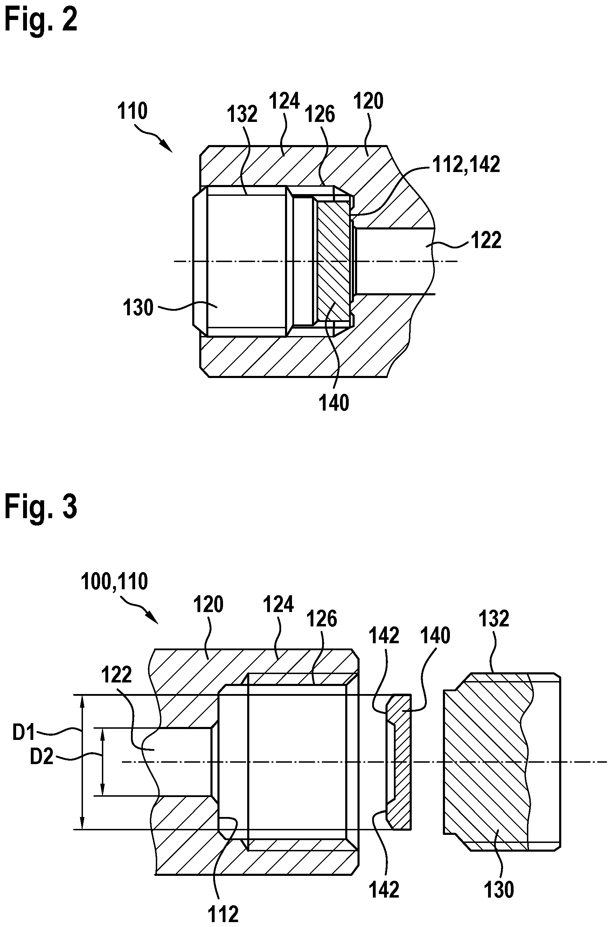

In Fig. 2 wird eine detaillierte seitliche Schnittansicht einer Schnittstelle 124 eines Verteilers 110 gezeigt. Die Schnittstelle 124 ist als Teil eines Hauptkörpers 120 des Verteilers gestaltet. Die Schnittstelle 124 umfasst eine Verschlussschraube 130 und eine Dichtungsplatte 140 zum Abdichten der jeweiligen Schnittstelle 124. Die Verschlussschraube 130 und die Dichtungsplatte 140 sind aus unterschiedlichen Materialien hergestellt. Der Verteiler 110 umfasst ein vorragendes Element 142, wobei das vorragende Element 142 von dem Verteiler 110 vorragt. Das vorragende Element 142 ist als eine Beißkante gestaltet, die von dem Verteiler 110 vorragt. Die Dichtungsplatte 140 ist zwischen einer Gegendichtungsfläche 112 des Verteilers 110 und der Verschlussschraube 130 angeordnet, wobei die Gegendichtungsfläche 112 rechtwinklig zu einer Strömungsrichtung der jeweiligen Schnittstelle 124 ausgerichtet ist. Die Gegendichtungsfläche 112 wird durch das vorragende Element 142 bereitgestellt. Die Verschlussschraube 130 umfasst ein Außengewinde 132, und die Schnittstelle 124 umfasst ein Innengewinde 126, um die Verschlussschraube 130 in den Verteiler 110 zu schrauben und die Dichtungsplatte 140 zwischen die Schnittstelle 124, hier die Gegendichtungsfläche 112, und die Verschlussschraube 130 zu klemmen. Der Verteiler 110 und die Dichtungsplatte 140 sind zumindest zum Teil aus Stahl, insbesondere austenitischem Edelstahl, hergestellt.

In Fig. 3 wird eine detaillierte seitliche Schnittansicht einer weiteren Schnittstelle 124 eines Verteilers 110 gezeigt. Die Schnittstelle 124 ist als Teil eines Hauptkörpers 120 des Verteilers gestaltet. Die Schnittstelle 124 umfasst eine Verschlussschraube 130 und eine Dichtungsplatte 140 zum Abdichten der jeweiligen Schnittstelle 124. Die Verschlussschraube 130 und die Dichtungsplatte 140 sind aus unterschiedlichen Materialien hergestellt. Die Dichtungsplatte 140 umfasst ein vorragendes Element 142, wobei das vorragende Element 142 von der Dichtungsplatte 140 vorragt. Das vorragende Element 142 ist als eine Beißkante gestaltet, die von der Dichtungsplatte 140 vorragt. Die Dichtungsplatte 140 ist zwischen einer Gegendichtungsfläche 112 des Verteilers 110 und der Verschlussschraube 130 angeordnet, wobei die Gegendichtungsfläche 112 rechtwinklig zu einer Strömungsrichtung der jeweiligen Schnittstelle 124 ausgerichtet ist. Die Verschlussschraube 130 umfasst ein Außengewinde 132, und die Schnittstelle 124 umfasst ein Innengewinde 126, um die Verschlussschraube 130 in den Verteiler 110 zu schrauben und die Dichtungsplatte 140 zwischen die Schnittstelle 124, hier die Gegendichtungsfläche 112, und die Verschlussschraube 130 zu klemmen. Der Verteiler 110 und die Dichtungsplatte 140 sind zumindest zum Teil aus Stahl, insbesondere austenitischem Edelstahl, hergestellt. Die Dichtungsplatte 140 umfasst einen ersten Durchmesser D1, und die Hauptbohrung 122 umfasst einen zweiten Durchmesser D2, wobei der erste Durchmesser größer als der zweite Durchmesser ist.

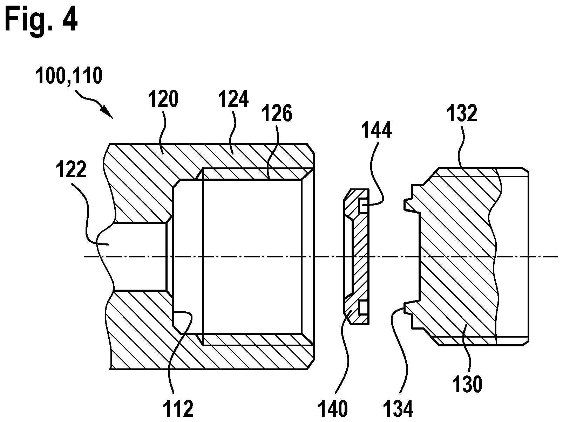

In Fig. 4 wird eine detaillierte seitliche Schnittansicht einer weiteren Schnittstelle 124 eines Verteilers 110 gezeigt. Die Schnittstelle 124 ist als Teil eines Hauptkörpers 120 des Verteilers gestaltet. Die Schnittstelle 124 umfasst eine Verschlussschraube 130 und eine Dichtungsplatte 140 zum Abdichten der jeweiligen Schnittstelle 124. Die Verschlussschraube 130 und die Dichtungsplatte 140 sind aus unterschiedlichen Materialien hergestellt. Die Dichtungsplatte 140 ist zwischen einer Gegendichtungsfläche 112 des Verteilers 110 und der Verschlussschraube 130 angeordnet, wobei die Gegendichtungsfläche 112 rechtwinklig zu einer Strömungsrichtung der jeweiligen Schnittstelle 124 ausgerichtet ist. Die Verschlussschraube 130 umfasst ein Außengewinde 132, und die Schnittstelle 124 umfasst ein Innengewinde 126, um die Verschlussschraube 130 in den Verteiler 110 zu schrauben und die Dichtungsplatte 140 zwischen die Schnittstelle 124, hier die Gegendichtungsfläche 112, und die Verschlussschraube 130 zu klemmen. Der Verteiler 110 und die Dichtungsplatte 140 sind zumindest zum Teil aus austenitischem Edelstahl hergestellt. Die Verschlussschraube 130 umfasst ein Anordnungselement 134, das von der Verschlussschraube 130 vorragt. Das vorragende Anordnungselement 134 ist als eine Beißkante gestaltet. Die Dichtungsplatte 140 umfasst ein Gegenanordnungselement 144, wobei das Anordnungselement 134 und das Gegenanordnungselement 144 zumindest zum Teil ineinandergreifend und dazu ausgelegt sind, die Dichtungsplatte 140 bezüglich der Verschlussschraube 130 anzuordnen.

## Patentansprüche

1. Verteiler (110) für ein H2-Hochdrucksystem (100), wobei der Verteiler (110) einen Hauptkörper (120) mit einer Anzahl von radialen und/oder axialen Schnittstellen (124) zum Verbinden des Verteilers (110) mit einer Betankungsinfrastruktur (150) und/oder dem H2-Hochdrucksystem (100) umfasst, wobei die Anzahl von Schnittstellen (124) miteinander verbunden sind, um Fluid über eine Hauptbohrung (122) entlang dem Hauptkörper (120) zu verteilen, wobei mindestens eine der Anzahl von Schnittstellen (124) eine Verschlussschraube (130) und eine Dichtungsplatte (140) zum Abdichten der jeweiligen mindestens einen Schnittstelle (124) umfasst.

2. Verteiler (110) nach Anspruch 1,
**dadurch gekennzeichnet,**
**dass** die Dichtungsplatte (140) und/oder der Verteiler (110) und/oder die Verschlussschraube (130) mindestens ein vorragendes Element (142) oder das vorragende Anordnungselement (134) umfassen, wobei das mindestens eine vorragende Element (142) oder das vorragende Anordnungselement (134) von der Dichtungsplatte (140) und/oder dem Verteiler (110) und/oder der Verschlussschraube (130) vorragt.

3. Verteiler (110) nach Anspruch 2,
**dadurch gekennzeichnet,**
**dass** das mindestens eine vorragende Element (142) oder das vorragende Anordnungselement (134) als eine Beißkante gestaltet ist, die von der Dichtungsplatte (140) und/oder dem Verteiler (110) und/oder der Verschlussschraube (130) vorragt.

4. Verteiler (110) nach einem der vorhergehenden Ansprüche,
**dadurch gekennzeichnet,**
**dass** die Dichtungsplatte (140) zwischen einer Gegendichtungsfläche (112) des Verteilers (110) und der Verschlussschraube (130) angeordnet ist, insbesondere wobei die Gegendichtungsfläche (112) in einem Winkel, insbesondere einem rechten Winkel, zu einer Strömungsrichtung der jeweiligen mindestens einen der Anzahl von Schnittstellen (124) ausgerichtet ist.

5. Verteiler (110) nach einem der vorhergehenden Ansprüche,
**dadurch gekennzeichnet,**
**dass** die Verschlussschraube (130) und die Dichtungsplatte (140) aus verschiedenen Materialien hergestellt sind und/oder wobei die Verschlussschraube (130) eine Korrosionsschutzschicht, insbesondere eine Zink- und/oder Nickel(ZnNi)-Beschichtung, umfasst.

6. Verteiler (110) nach einem der vorhergehenden Ansprüche,
**dadurch gekennzeichnet,**
**dass** die Verschlussschraube (130) ein Außengewinde (132) umfasst und die mindestens eine der Anzahl von Schnittstellen (124) ein Innengewinde (126) umfasst, um die Verschlussschraube (130) in den Verteiler (110) zu schrauben und/oder die Dichtungsplatte (140) zwischen die mindestens eine der Anzahl von Schnittstellen (124) und die Verschlussschraube (130) zu klemmen.

7. Verteiler (110) nach einem der vorhergehenden Ansprüche,
**dadurch gekennzeichnet,**
**dass** die Verschlussschraube (130) ein vorragendes Anordnungselement (134) umfasst und die Dichtungsplatte (140) ein Gegenanordnungselement (144) umfasst, wobei das vorragende Anordnungselement (134) und das Gegenanordnungselement (144) zumindest zum Teil ineinandergreifend und/oder dazu ausgelegt sind, die Dichtungsplatte (140) bezüglich der Verschlussschraube (130) anzuordnen.

8. Verteiler (110) nach einem der vorhergehenden Ansprüche,
**dadurch gekennzeichnet,**
**dass** der Verteiler (110) und/oder die Dichtungsplatte (140) zumindest zum Teil aus Stahl, insbesondere austenitischem Edelstahl, hergestellt sind und/oder der Verteiler (110) zumindest zum Teil durch ein Schmiedeverfahren, ein Gussverfahren, ein Bearbeitungsverfahren, ein 3D-Druckverfahren und/oder ein Druckgussverfahren hergestellt wird.

9. Verteiler (110) nach einem der vorhergehenden Ansprüche,
**dadurch gekennzeichnet,**
**dass** die Dichtungsplatte (140) einen ersten Durchmesser (D1) umfasst und die Hauptbohrung (122) einen zweiten Durchmesser (D2) umfasst, wobei der erste Durchmesser größer als der zweite Durchmesser, insbesondere mindestens 125 % oder mindestens 150 % größer, ist.

10. H2-Hochdrucksystem (100), das mindestens einen Verteiler (110) nach einem der vorhergehenden Ansprüche umfasst.
